(19) 

**Europäisches Patentamt**

**European Patent Office**

**Office européen des brevets**

(11) **EP 1 925 465 A1**

(12) **EUROPEAN PATENT APPLICATION**

(43) Date of publication:
**28.05.2008 Bulletin 2008/22**

(51) Int Cl.:
*B60C 1/00* (2006.01)    *C08K 5/01* (2006.01)
*C08L 21/00* (2006.01)    *C08L 23/22* (2006.01)

(21) Application number: **07019330.5**

(22) Date of filing: **02.10.2007**

(84) Designated Contracting States:
**AT BE BG CH CY CZ DE DK EE ES FI FR GB GR HU IE IS IT LI LT LU LV MC MT NL PL PT RO SE SI SK TR**
Designated Extension States:
**AL BA HR MK RS**

(30) Priority: **02.10.2006 JP 2006270970**

(71) Applicant: **THE YOKOHAMA RUBBER CO., LTD. Tokyo 105-8685 (JP)**

(72) Inventor: **Suzuki, Yoshihiko**
**Hiratsuka-shi**
**Kanagawa 254-8601 (JP)**

(74) Representative: **HOFFMANN EITLE**
**Patent- und Rechtsanwälte**
**Arabellastrasse 4**
**81925 München (DE)**

(54) **Rubber composition for tire inner liner and pneumatic tire using the same**

(57)    A rubber composition having well-balanced improved processability before vulcanization, air barrier property after vulcanization, and age resistance after vulcanization, and is useful for manufacturing a tire inner liner is disclosed. The rubber composition comprises:
(A) a rubber component comprising 50 wt% or more of one or more butyl-based rubbers selected from the group consisting of butyl rubbers and halogenated butyl rubbers; and
(B) 3 to 20 parts by weight of a process oil with respect to 100 parts by weight of rubber component (A); wherein the process oil is comprised of aromatic hydrocarbon(s), paraffinic hydrocarbon(s), and naphthenic hydrocarbon (s), and when the weight percentages of the carbons constituting the aromatic hydrocarbons, the carbons constituting the paraffinic hydrocarbons, and the carbons constituting the naphthenic hydrocarbons in the process oil, as determined according to ASTM D2140, are expressed by $C_A$, $C_P$, and $C_N$, respectively, $C_A$, $C_P$, and $C_N$ are respectively within a range as follows: 20 wt% $\leq C_A \leq$ 40 wt%, 30 wt% $\leq C_P \leq$ 60 wt%, and 20 wt% $\leq C_N <$ 30 wt%.

**Description**

TECHNICAL FIELD

The present invention relates to a rubber composition for a tire inner liner. More specifically, the present invention relates to a rubber composition for a tire inner liner, having well-balanced improved processability before vulcanization, air barrier property after vulcanization, and age resistance after vulcanization.

BACKGROUND ART

Generally, it is desirable that pneumatic tires have low air permeability (or high air barrier property) in view of the air tightness of tire air chambers, and accordingly inner liners disposed on an inner surface of pneumatic tires are required to have a high air barrier property. Therefore, the production of inner liners often utilizes a rubber composition comprising mainly a butyl-based rubber(s) selected from butyl rubbers and halogenated butyl rubbers having an excellent air barrier property. However, it is generally known that the processability of butyl rubbers and halogenated butyl rubbers upon processing by calendering, extruding, molding, and the like, before vulcanization are not very high, and therefore, adding various plasticizers and softening agents that are usually used in formulating a rubber composition to a rubber composition is normally carried out. Although the terms "plasticizer" and "softening agent" are employed in accordance with the intended use, they have essentially the same function and there is no clear distinction between them. Accordingly, hereinafter a plasticizer or softening agent are collectively referred to by the term "plasticizer".

Various hydrocarbon-based plasticizers are known as being useful as rubber plasticizers added to a rubber composition for producing an inner liner for pneumatic tires, and using as a hydrocarbon-based plasticizer a paraffinic oil (Patent Document 1), one or more of naphthenic oils and paraffinic oils (Patent Document 2), and one or more of paraffinic oils and aromatic oils (Patent Document 3) have been proposed, for example.

However, when conventional rubber plasticizers are used to produce an inner liner, processability before vulcanization, air barrier property after vulcanization, and age resistance after vulcanization cannot be improved in a well-balanced manner.

[Patent Document 1] Japanese Unexamined Patent Publication No. 6-192508

[Patent Document 2] Japanese Unexamined Patent Publication No. 2002-88191

[Patent Document 3] Japanese Unexamined Patent Publication No. 2005-60442

DISCLOSURE OF INVENTION

Problems to be Solved by the Invention

Although it has been known to use various rubber plasticizers in the production of an inner liner for pneumatic tires, as described above, improving processability before vulcanization, air barrier property after vulcanization, and age resistance after vulcanization in a well-balanced manner has not yet been proposed for rubber compositions comprising butyl-based rubber(s) selected from the group consisting of butyl rubbers and halogenated butyl rubbers.

Accordingly, the object of the present invention is to provide a rubber composition for a tire inner liner, having well-balanced improved processability before vulcanization, air barrier property after vulcanization, and age resistance after vulcanization.

Means to Solve the Problems

The inventors have made extensive study with a view to overcome the above problems, and as a result found that, when a specific amount of a process oil comprising specific proportions of aromatic hydrocarbon(s), paraffinic hydrocarbon(s), and naphthenic hydrocarbon(s) is blended with a rubber component comprising 50 wt% or more of one or more butyl-based rubbers selected from the group consisting of butyl rubbers and halogenated butyl rubbers, a rubber composition which has well-balanced improved processability before vulcanization, air barrier property after vulcanization, and age resistance after vulcanization and is useful for the production of a tire inner liner can be obtained and have achieved the present invention.

According to the present invention, there is provided a rubber composition for a tire inner liner, comprising:

(A) a rubber component comprising 50 wt% or more of one or more butyl-based rubbers selected from the group consisting of butyl rubbers and halogenated butyl rubbers; and

(B) 3 to 20 parts by weight of a process oil with respect to 100 parts by weight of rubber component (A); wherein the process oil is comprised of aromatic hydrocarbon(s), paraffinic hydrocarbon(s), and naphthenic hydrocarbon

(s), and when the weight percentages of the carbons constituting the aromatic hydrocarbon(s), the carbons constituting the paraffinic hydrocarbon(s), and the carbons constituting the naphthenic hydrocarbon(s) in the process oil, as determined according to ASTM D2140, are expressed by $C_A$, $C_P$, and $C_N$, respectively, $C_A$, $C_P$, and $C_N$ are respectively within a range as follows: 20 wt% $\leq C_A \leq$ 40 wt%, 30 wt% $\leq C_P \leq$ 60 wt%, and 20 wt% $\leq C_N <$ 30 wt%.

BEST MODE FOR CARRYING OUT THE INVENTION

Rubber component (A) in a rubber composition for a tire inner liner of the present invention comprises 50 wt% or more, based on the total weight of rubber component (A), of one or more of butyl-based rubbers selected from the group consisting of butyl rubbers and halogenated butyl rubbers. As the butyl rubbers and halogenated butyl rubbers, commercially available ones can be used. As the butyl-based rubbers, halogenated butyl rubbers are preferred. Examples of the halogenated butyl rubbers include, for example, chlorobutyl rubbers and bromobutyl rubbers.

Examples of the rubbers that may be incorporated in the above rubber component, other than one or more of butyl-based rubbers selected from the group consisting of butyl rubbers and halogenated butyl rubbers, include rubbers selected from diene rubbers such as natural rubbers, butadiene rubbers, isoprene rubbers, styrene-butadiene rubbers, and non-diene rubbers such as ethylene-propylene rubbers. The rubber composition of the present invention may contain one or more of these rubbers in any proportions, provided that rubber component (A) contains one or more butyl-based rubbers selected from the group consisting of butyl rubbers and halogenated butyl rubbers at a proportion described above.

Process oil (B) contained as a plasticizer in the rubber composition according to the present invention is comprised of aromatic hydrocarbon(s), paraffinic hydrocarbon(s), and naphthenic hydrocarbon(s), and when the weight percentages of the carbons constituting the aromatic hydrocarbon(s), the carbons constituting the paraffinic hydrocarbon(s), and the carbons constituting the naphthenic hydrocarbon(s) in the process oil, as determined according to ASTM D2140, are expressed by $C_A$, $C_P$, and $C_N$, respectively, $C_A$, $C_P$, and $C_N$ are respectively within a range as follows: 20 wt% $\leq C_A \leq$ 40 wt%, 30 wt% $\leq C_P \leq$ 60 wt%, and 20 wt% $\leq C_N <$ 30 wt%. Process oil (B) may be comprised of one process oil or may be comprised of a mixture of a plurality of process oils. When process oil (B) is comprised of a mixture of a plurality of process oils, the plurality of process oils may have different $C_A$, $C_P$, and $C_N$ values from each other, provided that each of the $C_A$, $C_P$, and $C_N$ of the mixture of the process oils is within the given range described above.

Petroleum fractions having high boiling points are typically used as rubber process oils, and are classified into paraffinic hydrocarbons that are linear saturated hydrocarbons, naphthenic hydrocarbons that are cyclic saturated hydrocarbons, and aromatic hydrocarbons that are aromatic series hydrocarbons by their chemical structures. These hydrocarbons are distinguished by the numerical value commonly known as the viscosity-gravity constant (hereinafter referred to as "VGC"). Aromatic hydrocarbons have a VGC of 0.900 or more, paraffinic hydrocarbons have a VGC of 0.790 to 0.849, and naphthenic hydrocarbons have a VGC of 0.850 to 0.899. The proportions (wt%) of the carbons constituting the paraffinic hydrocarbon(s), the carbons constituting the naphthenic hydrocarbon(s), and the carbons constituting the aromatic hydrocarbon(s) in a given sample can be determined from the VGC and the values of refractive index, specific gravity, dynamic viscosity, and the like, of the sample, in accordance with an analysis method known as the ring analysis method, such as ASTM D2140.

The rubber composition according to the present invention contains 3 to 20 parts by weight, preferably 7 to 18 parts by weight of process oil (B), with respect to 100 parts by weight of rubber component (A). If the amount of process oil (B) is less than 3 parts by weight with respect to 100 parts by weight of rubber component (A), the processability before vulcanization cannot be improved satisfactorily. If the amount of process oil (B) is more than 20 parts by weight with respect to 100 parts by weight of rubber component (A), the processability before vulcanization is improved, but the air barrier property is decreased.

In addition to rubber component (A) and process oil (B) as described above, various compounding ingredients that are usually blended with tire rubber compositions, including reinforcing fillers such as carbon black, inorganic fillers such as clay and talc that are commonly known to improve the air barrier property, stearic acid, vulcanizing or crosslinking agent, vulcanization or crosslinking accelerator, antioxidant, and the like, may be blended with the rubber composition according to the present invention in a commonly used amount.

The rubber composition according to the present invention may be prepared by a common mixing or kneading method and operating conditions using a mixing or kneading apparatus such as Banbury mixer or kneaders that are usually used in producing a rubber composition. The rubber composition according to the present invention may be prepared by kneading the given amounts of the above components together with the other compounding ingredients or by preliminarily preparing a rubber mixture (masterbatch) of specific components and subsequently mixing or kneading the rubber mixture with the other predetermined components. A tire inner liner can be formed by processing the rubber composition of the present invention obtained after the kneading process by means of a calendering machine or an extruder to have a desired thickness and then cutting into a suitable size.

The present invention will be further explained with reference to the following examples. However; it should be understood that the following examples are not intended to limit the scope of the present invention.

Examples

Preparations of Rubber Compositions of Control Example, Examples 1 to 8, and Comparative Examples 1 to 5

The ingredients shown in the following Table 1, except for the sulfur, vulcanization accelerator and zinc oxide, were mixed using a BB-2 type mixer set at 60°C and at a rotation speed of 30 rpm for 3 to 5 minutes until the temperature of the mixture reached at 110°C, and the resulting mixture was discharged from the mixer. The sulfur, vulcanization accelerator, and zinc oxide were added to the mixture on an open roll to obtain a rubber composition of each example. A part of each of the resulting rubber compositions was shaped into a piece having a shape required in each of the following tests, and vulcanized at 150°C for 30 minutes.
Table 1 Formulations of Rubber Compositions (parts by weight)

| Ingredients | Control Ex. | Comp. Ex. 1 | Ex. 1 | Ex. 2 | Ex. 3 | Comp. Ex. 2 | Comp. Ex. 3 | Ex. 4 | Ex. 5 | Ex. 6 | Ex. 7 | Ex. 8 | Comp. Ex. 4 | Com.Ex. 5 |
|---|---|---|---|---|---|---|---|---|---|---|---|---|---|---|
| Bromobutyl, rubber[1] | 100 | 100 | 100 | 100 | 100 | 100 | 100 | 100 | 100 | 100 | 100 | 60 | 100 | 100 |
| Butyl rubber[2] | - | - | - | - | - | - | - | - | - | - | - | 40 | - | - |
| Carbon black[3] | 60 | 60 | 60 | 60 | 60 | 60 | 60 | 60 | 60 | 60 | 60 | 60 | 60 | 60 |
| Stearic acid[4] | 1 | 1 | 1 | 1 | 1 | 1 | 1 | 1 | 1 | 1 | 1 | 1 | 1 | 1 |
| Zinc oxide[5] | 3 | 3 | 3 | 3 | 3 | 3 | 3 | 3 | 3 | 3 | 3 | 3 | 3 | 3 |
| Vulcanization accelerator [6] | 1.3 | 1.3 | 1.3 | 1.3 | 1.3 | 1.3 | 1.3 | 1.3 | 1.3 | 1.3 | 1.3 | 1.3 | 1.3 | 1.3 |
| Sulfur[7] | 0.5 | 0.5 | 0.5 | 0.5 | 0.5 | 0.5 | 0.5 | 0.5 | 0.5 | 0.5 | 0.5 | 0.5 | 0.5 | 0.5 |
| Process oil 1[8] | 7 | - | - | - | - | - | - | - | - | - | - | - | - | - |
| Process oil 2[9] | - | - | 7 | 4 | 18 | - | - | - | - | - | - | 7 | 2 | 21 |
| Process oil 3[10] | - | - | - | - | - | 7 | - | - | - | - | - | - | - | - |
| Process oil 4[11] | - | - | - | - | - | - | 7 . | - | - | - | - | - | - | - |
| Process oil 5[12] | - | - | - | - | - | - | - | 7 | - | - | - | - | - | - |
| Process oil 6[13] | - | - | - | - | - | - | - | - | 7 | - | - | - | - | - |
| Process oil 7[14] | - | - | - | - | - | - | - | - | - | 7 | - | - | - | - |

EP 1 925 465 A1

(continued)

| Ingredients | Control Ex. | Comp. Ex. 1 | Ex. 1 | Ex. 2 | Ex. 3 | Comp. Ex. 2 | Comp. Ex. 3 | Ex. 4 | Ex. 5 | Ex. 6 | Ex. 7 | Ex. 8 | Comp. Ex. 4 | Com.Ex. 5 |
|---|---|---|---|---|---|---|---|---|---|---|---|---|---|---|
| Process oil 8[15] | - | - | - | - | - | - | - | - | - | - | 7 | - | - | - |

Note:

(1) Bromobutyl 2255 (manufactured by Japan Butyl Co., Ltd.)

(2) Butyl 268 (manufactured by Japan Butyl Co., Ltd.)

(3) Seast V (manufactured by Tokai Carbon Co., Ltd.)

(4) Industrial stearic acid (manufactured by Nippon Oil and Fats Co.)

(5) Zinc Oxide No. 3 (manufactured by Seido Chemical Industry Co., Ltd.)

(6) Nocceler DM (manufactured by Ouchi Shinko Chemical Industry Co., Ltd.)

(7) Powder sulfur (manufactured by Hosoi Chemical Industry Co., Ltd.)

(8) Process Oil P-100 (manufactured by Fuji Kosan Co., Ltd.) ($C_A$=5 wt%, $C_P$=67 wt%, $C_N$=28 wt%) (9) Extract No. 4S (manufactured by Showa Shell Sekiyu) ($C_A$=28 wt%, $C_P$=48 wt%, $C_N$=24 wt%) (10) AH24 (manufactured by Idemitsu Kosan Co., Ltd.) ($C_A$=44 wt%, $C_P$=25 wt%, $C_N$=31 wt%) (11) Calsol 810 (manufactured by Calmet Oil) ($C_A$=12 wt%, $C_P$=40 wt%, $C_N$=48 wt%) (12) a 1:1 weight ratio mixture ($C_A$=25 wt%, $C_P$=46 wt%, $C_N$=29 wt%) of Process oil 1 and Process oil 2 (13) a 34:66 weight ratio mixture ($C_A$=20 wt%, $C_P$=55 wt%, $C_N$=25 wt%) of Process oil 1 and Process oil 2 (14) a 61:39 weight ratio mixture ($C_A$=20 wt%, $C_P$=51 wt%, $C_N$=29 wt%) of Process oil 1 and Process oil 3 (15) a 25:75 weight ratio mixture ($C_A$=40 wt%, $C_P$=31 wt%, $C_N$=29 wt%) of Process oil 2 and Process oil 3

Test Methods

(1) Ring Analysis

The weight percentages of the carbons constituting the aromatic hydrocarbon(s), the carbons constituting the paraffinic hydrocarbon(s), and the carbons constituting the naphthenic hydrocarbon(s), $C_A$, $C_P$, and $C_N$, in process oils 1 to 4 used in the Control Example, Examples, and Comparative Examples were respectively determined according to ASTM D2140. The procedure for determining the values of $C_A$, $C_P$, and $C_N$ as defined in ASTM D2140 is summarized as follows. First, density d at 20°C is determined according to ASTM D1481 or D4052, and then the value of density d is converted to specific gravity G at 15.6°C. In addition, dynamic viscosity V (cSt) at 37.8°C is determined according to ASTM D445, and the refractive index $n_D^{20}$ at 20°C is determined using sodium D-line according to ASTM D1218. Next, the viscosity-gravity constant VGC is determined by substituting specific gravity G and dynamic viscosity V determined above into the following formula:

$$VGC = (G + 0.0887 - 0.776 \log\log(10V-4)) / (1.082 - 0.72 \log\log(10V-4)),$$

0.72loglog(10V-4)),
and $r_i$ is determined by substituting density d and the refractive index $n_D^{20}$ into the following formula:

$$r_i = n_D^{20} - (d/2).$$

Next, the corresponding $C_A$, $C_P$, and $C_N$ values are determined from the values of VGC and ri using the correlation chart described in Fig. 1 of ASTM D2140.
If the sample oil contains 0.8% or more sulfur, the accuracy of the $C_A$, $C_P$, and $C_N$ values (hereinafter referred to as "$C_A$ before correction", "$C_P$ before correction", and "$C_N$ before correction", respectively) determined using the correlation chart described in Fig. 1 of ASTM D2140 can be improved by correcting them using the following formulae:

$$\text{Corrected } C_N = (C_A \text{ before correction}) - S/0.288$$

$$\text{Corrected } C_P = (C_P \text{ before correction}) - S/0.216$$

$$\text{Corrected } C_A = 100 - (C_N + C_P).$$

In these formulae, S represents the sulfur content (wt%) of the sample oil as determined according to ASTM D129.
The derivations of the $C_A$, $C_P$, and $C_N$ in the following Control Example, Examples, and Comparative Examples were carried out using the density d determined at 20°C by the hydrometer method according to JIS K2249 corresponding to ASTM D4052, specific gravity G at 15.6°C calculated from this density, dynamic viscosity V (cSt) determined at 37.8°C using a Cannon-Fenske viscometer, according to JTS K2283 corresponding to ASTM D445, and the refractive index $n_D^{20}$ determined at 20°C using a refractometer Type 3 (manufactured by Atago Co., Ltd), according to JIS C2101 corresponding to ASTM D1218.

(2) Mooney Viscosity

The Mooney viscosity was measured in accordance with JIS K6300 using an L-shaped rotor (tester: SMV300J manufactured by Shimadzu Corporation) preheated for 1 minute, rotor rotated for 4 minutes at a of temperature of 100°C. The smaller the Mooney viscosity value, the smaller the viscosity before vulcanization and the better the processability.

(3) Mooney Scorch Index

The time period to increase viscosity by 5 points was measured according to JIS K6300 at 125°C using an L-shaped rotor (tester: SMV300J manufactured by Shimadzu Corporation), and the time periods determined for each of Examples and Comparative Examples were expressed as an index number taking the time period determined for the Control Example as 100. The smaller the index value, the shorter the scorch time, and therefore the higher the tendency of scorching.

(4) Air Permeability

This test was conducted according to JIS K7126 "Test Method of Gas Permeability of Plastic Films and Sheets (Method A)". The gas used in this test was air (nitrogen : oxygen = about 8:2), and the testing temperature was 30°C. The results were expressed by an index number taking the air permeation coefficient of the Control Example as 100. The smaller the index number, the lower the air permeability, i.e.; the better the air barrier property.

(5) Aging Resistance

Test specimens having a size of 15 cm by 15 cm by 0.2 cm were prepared by pressing vulcanization with a mold, and the resulting test specimens were subjected to accelerated aging according to JIS K6257 by heating them in an oven set at 120°C and filled with air for 96 hours. The elongation at break (tensile speed: 500 mm/min.) was measured for the test specimens before and after aging, and the residual elongation at break (%) was determined using the following formula:

$$\text{Residual elongation at break (\%)}=$$
$$\text{(Elongation at break after aging)/(Elongation at}$$
$$\text{break before aging)}\times100.$$

(Elongation at break after aging)/(Elongation at break before aging)$\times$100.
The larger the value of the residual elongation at break, the better the age resistance.

(6) Air Pressure Retaining Property

The rubber compositions of the Control Example, Examples 1 to 8, and Comparative Examples 1 to 5 were processed into a sheet form, and a truck-bus steel radial tire having a tire size of 11R22.5 14PR was produced for each example using the resulting sheet as an inner liner. The tire air pressure of these tires was set to 700 kPa, and the tires were allowed to stand under no-load conditions at room temperature 21°C for 3 months, and were measured for tire inner pressure every 4 days. The value a was determined by regressing the initial pressure $P_0$, the measured pressure $P_t$, and the number of days elapsed into the formula: $P_t/P_0=\exp(-\alpha t)$, and then the air pressure reduction rate per month was determined by substituting the $\alpha$ value thus obtained and t=30 into the formula: $\beta=[1-\exp(-\alpha t)]\times100$. The air pressure reduction rate is used as a measure of the air pressure retaining property. The air pressure retaining property of Examples 1 to 8 and Comparative Examples 2, 3, and 5 were expressed as an index number taking the air pressure retaining properties determined for the Control Example as 100. The smaller the index value, the better the air pressure retaining property.

According to test methods (2) to (6) described above, each of the rubber compositions of the Control Example, Examples 1 to 8 and Comparative Examples 1 to 5 was tested. The test results are shown in Table 2 below. The rubber compositions of Comparative Examples 1 and 4 were not tested for the air pressure retaining property, because they were difficult to calender into a sheet due to their high Mooney viscosity, and therefore were unable to produce a tire.

Table 2. Test Results

| | Control Ex. | Comp. Ex. 1 | Comp. Ex. 1 | Ex. 2 | Ex. 3 | Comp. Ex. 2 | Comp. Ex. 3 | Ex. 4 | Ex. 5 | Ex. 6 | Ex. 7 | Ex. B | Comp. Ex. 4 | Camp. Ex. 5 |
|---|---|---|---|---|---|---|---|---|---|---|---|---|---|---|
| Mooney viscosity | 60 | 74 | 62 | 68 | 51 | 65 | 59 | 61 | 61 | 62 | 64 | 60 | 72 | 48 |
| Mooney scorch index | 100 | 92 | 97 | 95 | 110 | 84 | 109 | 99 | 98 | 98 | 95 | 113 | 94 | 113 |
| Air permeability | 100 | 80 | 83 | 81 | 92 | 82 | 63 | 82 | 89 | 93 | 82 | 78 | 81 | 96 |
| Residual elongation at break (%) | 80 | 83 | 88 | 87 | 80 | 86 | 76 | 84 | 85 | 82 | 87 | 91 | 85 | 78 |
| Air pressure retaining property | 100 | ND | 85 | 84 | 97 | 86 | 85 | 84 | 90 | 95 | 86 | 82 | ND | 100 |
| Note: "ND" represents that the test was not carried out because of the difficulty in calendering the resulting rubber composition into a sheet. | | | | | | | | | | | | | | |

As can be seen from the results in Table 2, Comparative Example 1, which has the same composition as that of the Control Example, except that Process Oil 1 having $C_A$=5 wt%, $C_P$=67 wt%, and $C_N$=28 wt%, as determined by the ring analysis, resulted in a substantial improvement in air barrier property, but also resulted in a substantial increase in Mooney viscosity. This substantial increase in Mooney viscosity brought about a reduction in the processability preventing calendering into a sheet. Example 1 containing 7 parts by weight of Process Oil 2 with respect 100 parts by weight of the rubber component exhibits almost the same levels of the Mooney viscosity and the Mooney scorch index as those of the Control Example, and exhibits improvements in the air barrier property and the tire air pressure retaining property and also an improvement in age resistance. Although Example 2 containing 4 parts by weight of Process Oil 2 with respect 100 parts by weight of the rubber component exhibits a small increase in the Mooney viscosity and a small decrease in the Mooney scorch index, as compared to Example 1, these variations in the viscosity properties are within the acceptable range for processing, and the degrees of improvements in the air barrier property and the tire air pressure retaining property of Example 2 are better than those of Example 1, and moreover the age resistance of Example 2 is at almost the same level as that of Example 1. Example 3 containing 18 parts by weight of Process Oil 2 with respect to 100 parts by weight of the rubber component exhibits a more significant decrease in the Mooney viscosity and a more significant increase in the Mooney scorch index as compared to Example 1, is more easy to process than Example 1, and exhibits improved air barrier property, tire air pressure retaining property, and age resistance, as compared to the Control Example. Although Comparative Example 2 having a %$C_A$ and a %$C_N$ exceeding the range of the present invention and a %$C_P$ falling below the range of the present invention exhibits improved air barrier property, tire air pressure retaining property, and age resistance, as compared to the Control Example, it exhibits a decrease in the Mooney scorch index and a decrease in the processing property, as compared to the Control Example. Although Comparative Example 3 having a %$C_A$ falling below the range of the present invention and a %$C_N$ exceeding the range of the present invention exhibits improved air barrier property and tire air pressure retaining property as compared to the Control Example at almost the same level of the Mooney scorch index as that of the Control Example, and an increase in the Mooney scorch index and an improvement in the processing property as compared to the Control Example, it exhibits a decrease in the age resistance. When a mixture ($C_A$=25 wt%, $C_P$=46 wt%, $C_N$=29 wt%) obtained by mixing Process Oil 1 and Process Oil 3 at a weight ratio of 1:1 was blended in the same amount as that of Example 1 (Example 4), the same effects as those of Example 1 were achieved. As in Example 4, when a mixture which is obtained by mixing a plurality of process oils and which has $C_A$, $C_P$, and $C_N$ values within the range of the present invention was blended in the same amount as that of Example 1 (Examples 5 to 8), the same effects as those of Example 1 were achieved. Comparative Example 4 containing a process oil in an amount falling below the range of the present invention exhibits a significant increase in the Mooney viscosity, a decrease in the Mooney scorch index, and a decrease in the processing property. Comparative Example 5 containing a process oil in an amount exceeding the range of the present invention exhibits a decrease in age resistance, and there was almost no improvement in the air barrier property and air pressure retaining property.

## Claims

1. A rubber composition for tire inner liner, comprising:

(A) a rubber component comprising 50 wt% or more of one or more butyl-based rubbers selected from the group consisting of butyl rubbers and halogenated butyl rubbers; and
(B) 3 to 20 parts by weight of a process oil with respect to 100 parts by weight of rubber component (A);
wherein the process oil is comprised of aromatic hydrocarbon(s), paraffinic hydrocarbon(s), and naphthenic hydrocarbon(s), and when the weight percentages of the carbons constituting the aromatic hydrocarbon(s), the carbons constituting the paraffinic hydrocarbon(s), and the carbons constituting the naphthenic hydrocarbon(s) in the process oil, as determined according to ASTM D2140, are expressed by $C_A$, $C_P$, and $C_N$, respectively, $C_A$, $C_P$, and $C_N$ are respectively within a range as follows: 20 wt% $\leq C_A \leq$ 40 wt%, 30 wt% $\leq C_P \leq$ 60 wt%, and 20 wt% $\leq C_N <$ 30 wt%.

2. The rubber composition according to claim 1, wherein process oil (B) is comprised of one process oil or is comprised of a mixture of a plurality of process oils, and in the event that process oil (B) is comprised of a mixture of a plurality of process oils, said mixture has $C_A$, $C_P$ and $C_N$ each within a given range as defined in claim 1.

3. The rubber composition according to claim 1 or 2, wherein said one or more butyl-based rubbers are comprised of halogenated rubber(s).

4. The rubber composition according to any one of claims 1 to 3, wherein said rubber component is consisted only of butyl-based rubber(s).

5. A pneumatic tire comprising a tire inner liner prepared using the rubber composition according to any one of claims 1 to 4.

**European Patent Office**

**EUROPEAN SEARCH REPORT**

Application Number

EP 07 01 9330

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2006/094831 A1 (CHOI WONMUN [JP] ET AL) 4 May 2006 (2006-05-04) * paragraph [0202]; tables VII-I * | 1-5 | INV. B60C1/00 C08K5/01 C08L21/00 C08L23/22 |
| X | US 2002/033217 A1 (KANENARI DAISUKE [JP] ET AL) 21 March 2002 (2002-03-21) * paragraph [0012]; table 3 * | 1-5 | |
| X | EP 1 647 420 A (YOKOHAMA RUBBER CO LTD [JP]) 19 April 2006 (2006-04-19) * paragraphs [0036] - [0038] * | 1-5 | |
| X | US 2006/155078 A1 (CHOI WONMUN [JP] ET AL) 13 July 2006 (2006-07-13) * examples 3-9; tables 3,5 * | 1-4 | |
| X | EP 0 940 462 A (BRIDGESTONE CORP [JP]) 8 September 1999 (1999-09-08) * paragraphs [0058] - [0061]; examples 1-7,10,11,13,14 * | 1-4 | |
| A | WOMMELSDORFF R ET AL: "EIN BEITRAG ZUR REDUZIERUNG DER POLYZYKLISCHEN AROMATEN AUS AROMATISCHEN MINERALOELWEICHMACHERN*" KAUTSCHUK UND GUMMI - KUNSTSTOFFE, HUTHIG VERLAG, HEIDELBERG, DE, vol. 45, no. 1, January 1992 (1992-01), pages 24-29, XP000246825 ISSN: 0948-3276 * the whole document * | 1-5 | TECHNICAL FIELDS SEARCHED (IPC) B60C C08K C08L |

-/--

The present search report has been drawn up for all claims

| Place of search | Date of completion of the search | Examiner |
|---|---|---|
| Munich | 26 March 2008 | Adams, Florian |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**European Patent Office**

**EUROPEAN SEARCH REPORT**

Application Number

EP 07 01 9330

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | NULL V: "Safe process oils for tires with low environmental impact" KAUTSCHUK UND GUMMI - KUNSTSTOFFE - ASBEST, DR. ALFRED HUTHIG VERLAG GMBH. HEIDELBERG, DE, vol. 52, no. 12, 1999, pages 799-800,802, XP002184259 * the whole document * ----- | 1-5 | |
| A | EP 0 939 104 A (BRIDGESTONE CORP [JP]) 1 September 1999 (1999-09-01) * the whole document * ----- | 1-5 | |
| | | | TECHNICAL FIELDS SEARCHED (IPC) |

The present search report has been drawn up for all claims

| Place of search | Date of completion of the search | Examiner |
|---|---|---|
| Munich | 26 March 2008 | Adams, Florian |

CATEGORY OF CITED DOCUMENTS

X : particularly relevant if taken alone
Y : particularly relevant if combined with another
   document of the same category
A : technological background
O : non-written disclosure
P : intermediate document

T : theory or principle underlying the invention
E : earlier patent document, but published on, or
   after the filing date
D : document cited in the application
L : document cited for other reasons

& : member of the same patent family, corresponding
   document

EPO FORM 1503 03.82 (P04C01)

## EP 1 925 465 A1

**ANNEX TO THE EUROPEAN SEARCH REPORT
ON EUROPEAN PATENT APPLICATION NO.**

EP 07 01 9330

This annex lists the patent family members relating to the patent documents cited in the above-mentioned European search report.
The members are as contained in the European Patent Office EDP file on
The European Patent Office is in no way liable for these particulars which are merely given for the purpose of information.

26-03-2008

| Patent document cited in search report | | | Publication date | Patent family member(s) | | | Publication date |
|---|---|---|---|---|---|---|---|
| US 2006094831 | A1 | | 04-05-2006 | EP | 1674521 | A1 | 28-06-2006 |
| | | | | WO | 2005035647 | A1 | 21-04-2005 |
| | | | | KR | 20070004405 | A | 09-01-2007 |
| US 2002033217 | A1 | | 21-03-2002 | DE | 10134624 | A1 | 31-01-2002 |
| | | | | JP | 2002030187 | A | 31-01-2002 |
| EP 1647420 | A | | 19-04-2006 | CN | 1744998 | A | 08-03-2006 |
| | | | | WO | 2005007423 | A1 | 27-01-2005 |
| | | | | US | 2006144495 | A1 | 06-07-2006 |
| US 2006155078 | A1 | | 13-07-2006 | DE | 112004000331 | T5 | 26-01-2006 |
| | | | | JP | 2004277705 | A | 07-10-2004 |
| | | | | WO | 2004074250 | A1 | 02-09-2004 |
| EP 0940462 | A | | 08-09-1999 | WO | 9735462 | A2 | 02-10-1997 |
| | | | | US | 6103808 | A | 15-08-2000 |
| EP 0939104 | A | | 01-09-1999 | DE | 69920302 | D1 | 28-10-2004 |
| | | | | DE | 69920302 | T2 | 24-11-2005 |
| | | | | ES | 2227969 | T3 | 01-04-2005 |
| | | | | US | 5998513 | A | 07-12-1999 |

EPO FORM P0459

For more details about this annex : see Official Journal of the European Patent Office, No. 12/82

14

**EP 1 925 465 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 6192508 A
- JP 2002088191 A
- JP 2005060442 A